# EUROPÄISCHE PATENTSCHRIFT

(11) **EP 0 498 177 B1**
(45) Veröffentlichungstag und Bekanntmachung des Hinweises auf die Patenterteilung: **01.04.1998**
(21) Anmeldenummer: 92100594.8
(22) Anmeldetag: 15.01.1992
(51) Int. Cl.: H04J 3/06, H04L 5/22

(54) **Verfahren und Anordnung zum Erzeugen eines Sende-Multiplexsignals und zum Synchronisieren eines Empfangs-Multiplexsignals auf das Sende-Multiplexsignal**
Method and arrangement for generation of transmission multiplex signal and for synchronization of a reception multiplex signal on the transmission multiplex signal
Procédé et dispositif pour la génération d'un signal multiplex d'émission et pour la synchronisation d'un signal multiplex de réception sur le signal multiplex d'émission

(30) Priorität: 30.01.1991 DE 4102722
(43) Veröffentlichungstag der Anmeldung: 12.08.1992
(73) Patentinhaber: SIEMENS AKTIENGESELLSCHAFT, 80333 München (DE)
(72) Erfinder: Kersten, Hans-Otto, Dipl.-Ing., W-1000 Berlin 45 (DE); Wild, Horst, Dipl.-Ing., W-1000 Berlin 47 (DE)

(56) Entgegenhaltungen:
- EP-A- 0 275 406
- AT-B- 368 332
- DE-B- 2 412 962
- TELCOM REPORT, 2. Jahrgang, Beiheft, 1979, Herausgegeben von der Siemens Aktienge- sellschaft, Berlin und München (DE) W. GRAF und F. KüHNE "Multiplexgerät DSMX 64K/2 und Einfügungsgerät DSE 64K/2 für die Digitalsignalübertragung" Seiten 46-51

## Beschreibung

In der Übertragungstechnik werden Digitalsignale insbesondere in der Plesiochron-Digital-Hierarchie übertragen. Diese weisen in jeder Hierarchieebene in Sende- und Empfangsrichtung nur annähernd gleiche Taktfrequenzen auf und werden jeweils bis zum Endgerät plesiochron verarbeitet.

In der Europäischen Patentanmeldung 0 275 406 A1 werden ein Verfahren und eine Anordnung zur Rückgewinnung des Taktes und/oder der Taktphase eines synchronen oder plesiochronen Digitalsignals beschrieben.

Ein Problem ergibt sich, wenn ein synchroner Betrieb zwischen Sende- und Empfangsrichtung eines Geräts erreicht werden soll.

Die mit der Erfindung erzielten Vorteile bestehen insbesondere darin, daß sich der durch die rahmenweise Phasenkorrektur entstehende systematische Jitter nur geringfügig auswirkt und daß in hochintegrierten CODEC/Filter-Bausteinen mit ihren minimalen geometrischen Abmessungen bei synchroner Signalverarbeitung im Sende- und Empfangsteil die sonst bei asynchroner Signalverarbeitung auftretenden Übersprechverzerrungen vermieden werden.

Vorteilhafte Ausgestaltungen der Erfindung sind in den Ansprüchen 2 und 3 angegeben. Diese ermöglichen eine besonders einfache Realisierung. Im Anspruch 4 ist weiter eine Anordnung zur Durchführung des erfindungsgemäßen Verfahrens angegeben.

Ein Ausführungsbeispiel der Erfindung ist in der Zeichnung dargestellt und wird im folgenden näher beschrieben.

Es zeigen:
- Fig. 1: eine Anordnung zur Durchführung des Verfahrens,
- Fig. 2: serielle Eingangs- oder Ausgangsdaten in einem Hilfsrahmen,
- Fig. 3: parallele interne Daten,
- Fig. 4: serielle Ausgangsdaten oder synchronisierte serielle Eingangsdaten und
- Fig. 5: eine Phasenanpassungseinrichtung.

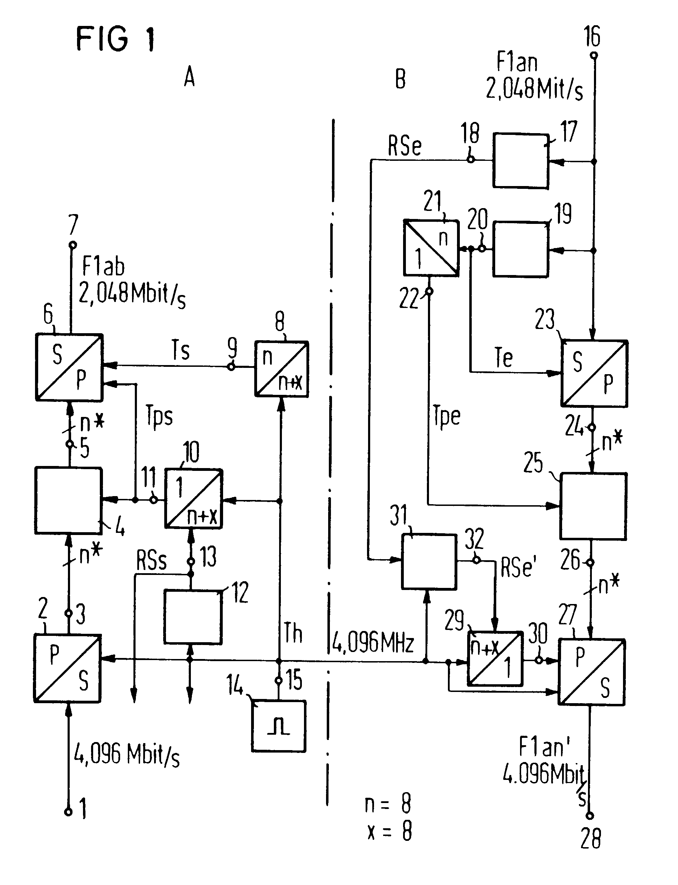

Figur 1 zeigt die Anordnung zur Durchführung des erfindungsgemäßen Verfahrens mit einem Sendeteil A und einem Empfangsteil B für ein Sende- und ein Empfangs-Multiplexsignal einer Bitrate von 2,048 Mbit/s. n und x ist jeweils gleich acht gewählt.

Der Sendeteil A enthält einen ersten Pufferspeicher, der sich aus einem Seriell-Parallel-Umsetzer 2, einem Parallelregister 4 und einem Parallel-Seriell-Umsetzer 6 zusammensetzt, einen (n+x):n-Frequenzteiler 8, einen (n+x):1-Frequenzteiler 10, eine Synchronisiereinrichtung 12 und einen Hilfstaktgenerator 14. Ziffern mit einem * geben die Anzahl paralleler Leitungen an, die hier acht beträgt.

Der Empfangsteil B enthält eine Synchronisiereinrichtung 17, eine Taktrückgewinnungseinrichtung 19, einen n:1-Frequenzteiler 21, einen Pufferspeicher, der aus einem Seriell-Parallel-Umsetzer 23, einem Parallelregister 25 und einem Parallel-Seriell-Umsetzer 27 besteht, einen (n+x):1-Frequenzteiler 29 und eine Phasenanpassungseinrichtung 31.

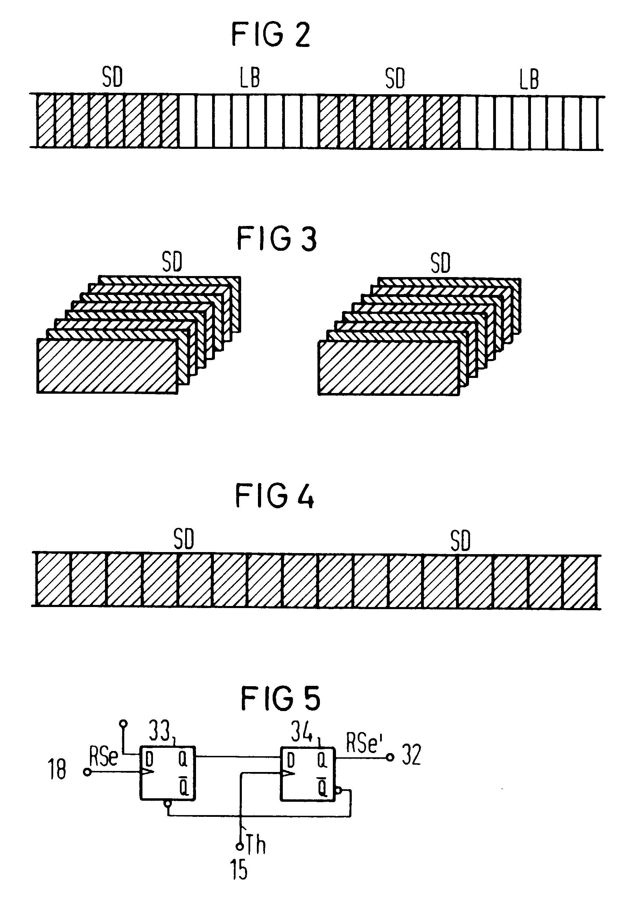

Dem Eingang 1 des Sendeteils A werden serielle Sendedaten in Form von 8-bit-Bytes SD in einem Hilfsrahmen nach Figur 2 zugeführt, in dem auf jedes schraffiert dargestellte 8-bit-Byte acht Leerbits LB folgen. Erzeugt werden diese Sendedaten mit einem gemeinsamen Hilfstakt Th einer Frequenz von 4,096 MHz aus dem Hilfstaktgenerator 14 und einem Rahmensynchronsignal am Anschluß 13 der Synchronisiereinrichtung 12. Die Sendedaten werden mit dem gemeinsamen Hilfstakt Th im Seriell-Parallel-Umsetzer 2 umgesetzt. Über den Ausgang 3 werden mit dem sendeseitigen Hilfstakt Tps am Anschluß 11 lediglich die 8-bit-Bytes nach Figur 3 in das Parallelregister 4 übernommen. Diese werden wiederum über den Ausgang 5 mit dem sendeseitigen Hilfstakt Tps am Ausgang 11 in den Parallel-Seriell-Umsetzer 6 aufgenommen und mit dem Sendetakt Ts am Ausgang 7 als Sende-Multiplexsignal F1ab nach Figur 4 abgegeben. Der (n+x):n-Frequenzteiler 8 teilt den gemeinsamen Hilfstakt Th und gibt an seinem Ausgang 9 den Sendetakt Ts ab. Der (n+x):1-Frequenzteiler 10 teilt den gemeinsamen Hilfstakt Th unter Steuerung eines in der Synchronisieranordnung 12 erzeugten sendeseitigen Rahmen-Synchronsignals RSs am Synchronisiereingang 13.

Der Empfangsteil B empfängt an seinem Eingang 16 ein Empfangs-Multiplexsignal F1an nach Figur 4. Die Synchronisiereinrichtung 17 leitet aus dem Rahmenkennungswort im Empfangs-Multiplexsignal F1an ein empfangsseitiges Rahmen-Synchronsignal RSe ab und gibt es an ihrem Ausgang 18 ab. Die Taktrückgewinnungseinrichtung 19, wie sie aus der genannten Europäischen Patentanmeldung bekannt ist, leitet aus dem Empfangs-Multiplexsignal F1an den Empfangstakt Te ab und stellt diesen an ihrem Ausgang 20 zur Verfügung. Das Empfangs-Multiplexsignal F1an wird mit diesem Empfangstakt Te im Seriell-Parallel-Umsetzer 23 gemäß Figur 3 umgesetzt. Der Empfangstakt Te wird weiter im n:1-Frequenzteiler 21 in den empfangsseitigen Hilfstakt Tpe geteilt, die parallelen Empfangsdaten gemäß Figur 3 werden vom Anschluß 24 mit dem empfangsseitigen Hilfstakt Tpe in das Parallelregister 25 übernommen und an dessen Ausgang 26 dem Parallel-Seriell-Umsetzer 27 angeboten. Mit einem Ladetakt am Eingang 30 und dem gemeinsamen Hilftakt Th am Anschluß 15 werden die Empfangsdaten umgesetzt und seriell als synchronisiertes Empfangs-Multiplexsignal F1an' mit einem Hilfsrahmen nach Figur 2 am Ausgang 28 abgegeben. Je nachdem, ob die Frequenz des Empfangstakts Te größer oder kleiner als seine Nominalfrequenz ist, werden zur Anpassung im Bedarfsfall statt acht, weniger oder mehr Leerbits zwischen zwei 8-bit-Bytes eingefügt.

Figur 5 zeigt die Phasenanpassungseinrichtung 31 detailliert. Sie enthält zwei D-Flipflops 33 und 34. Das empfangsseitige Rahmen-Synchronisiersignal RSe setzt das D-Flipflop 33 asynchron. Das D-Flipflop 34 übernimmt das Q-Signal des D-Flipflops 33 mit dem gemeinsamen Hilfstakt Th und gibt es an seinem Q-Ausgang 32 als angepaßtes Rahmen-Synchronsignal RSe' ab.

## Patentansprüche

1. Verfahren zum Erzeugen eines Sende-Multiplexsignals (F1ab) mit in n-bit-Bytes gegliederten Sendedaten und zum Synchronisieren eines gegenüber dem Sende-Multiplexsignal (F1ab) plesiochronen Empfangs-Multiplexsignals (F1an) gleicher Bitrate ebenfalls mit in n-bit-Bytes gegliederten Empfangsdaten auf den synchronen Sendetakt (Ts) des Sende-Multiplexsignals (F1ab),
**dadurch gekennzeichnet**,
daß ein gemeinsamer Hilfstakt (Th) erzeugt wird, aus dem der Sendetakt (Ts) abgeleitet wird und dessen Frequenz gegenüber der nominellen Frequenz des Empfangstakts (Te) und der Frequenz des Sendetakts (Ts) um 1/n oder ein Vielfaches davon größer gewählt wird,
daß die Sendedaten in einem Hilfsrahmen derart verschachtelt werden, daß auf jedes n-bit-Byte x Leerbits folgen (x = 1, 2, 3,...),
daß die Bits des Hilfsrahmens mit dem gemeinsamen Hilfstakt (Th) seriell-parallel umgesetzt werden,
daß die Sendedaten mit einem aus dem gemeinsamen Hilfstakt (Th) (n+x):1 geteilten und von einem sendeseitigen Rahmen-Synchronsignal (RSs) gesteuerten sendeseitigen Hilfstakt (Tps) gespeichert werden,
daß die gespeicherten Sendedaten von dem sendeseitigen Hilfstakt (Tps) geladen mit dem Sendetakt (Ts) parallel-seriell umgesetzt werden und das Sende-Multiplexsignal (F1ab) bilden,
daß der Empfangstakt (Te) aus dem Empfangs-Multiplexsignal (F1an) rückgewonnen wird,
daß empfangsseitige Rahmen-Synchronsignale (RSe) aus den Empfangs-Multiplexsignal (F1an) abgetrennt werden,
daß die Empfangsdaten mit dem Empfangstakt (Te) seriell-parallel umgesetzt wird,
daß die umgesetzten Empfangsdaten mit einem aus dem Empfangstakt (Te) n:1 geteilten empfangsseitigen Hilfstakt (Tpe) gespeichert werden,
daß die empfangsseitigen Rahmen-Synchronsignale (RSe) mit dem gemeinsamen Hilfstakt (Th) phasenmäßig angepaßt werden und
daß die gespeicherten Empfangsdaten von jedem angepaßten Rahmen-Synchronsignal (RSe') ausgelöst mit dem gemeinsamen Hilfstakt (Th) parallel-seriell umgesetzt werden und das synchronisierte Empfangs-Multiplexsignal (F1an') bilden.

2. Verfahren nach Anspruch 1,
**dadurch gekennzeichnet,**
daß die Frequenz des gemeinsamen Hilfstakts (Th) doppelt so groß wie die Frequenz des Empfangstakts (Te) und des Sendetakts (Ts) gewählt wird.

3. Verfahren nach Anspruch 1,
**dadurch gekennzeichnet,**
daß n=8 und x=8 gewählt werden.

4. Verfahren nach Anspruch 1,
**dadurch gekennzeichnet,**
daß ein Pulsrahmen gemäß CCITT-Empfehlung G.704 gewählt wird,
daß eine Synchronisierung auf den Pulsrahmen gemäß CCITT-Empfehlung G.706 gewählt wird,
daß ein Synchronimpuls pro Pulsrahmen erzeugt wird,
daß als Frequenz des Hilfstakts (Th) 4,096 MHz gewählt werden,
daß als Frequenz des Sendetakts (Ts) und des Empfangstakts (Te) 2,048 MHz gewählt werden und daß als Datenrate des Sende- und des Empfangs-Multiplexsignals (F1ab, F1an) 2,048 Mbit/s gewählt werden.

5. Anordnung zur Durchführung des Verfahrens nach Anspruch 1, 2, 3 oder 4,
**dadurch gekennzeichnet,**
daß ein sendeseitiger Seriell-Parallel-Umsetzer (2) vorgesehen ist, dessen Eingang (1) zur Aufnahme der im Hilfsrahmen verschachtelten Sendedaten dient und dessen Takteingang mit dem Ausgang (15) eines Hilfstaktgenerators (14) verbunden ist,
daß ein sendeseitiger (n+x):1-Frequenzteiler (10) vorgesehen ist, dessen Eingang mit dem Ausgang (15) des Hilfstaktgenerators (14) verbunden ist,
daß eine sendeseitige Synchroneinrichtung (12) vorgesehen ist, deren Eingang mit dem Ausgang (15) des Hilfstaktgenerators (14) und deren Ausgang mit dem Synchronisiereingang (13) des (n+x):1-Frequenzteilers (10) verbunden ist,
daß ein sendeseitiges Parallelregister (4) vorgesehen ist, dessen Eingänge (3) mit den Ausgängen des sendeseitigen Seriell-Parallel-Umsetzers (2) verbunden sind,
daß ein sendeseitiger (n+x):n-Frequenzteiler (8) zur Ableitung des Sendetakts (Ts) aus dem gemeinsamen Hilfstakt (Th) vorgesehen ist,
daß ein sendeseitiger Parallel-Seriell-Umsetzer (6) vorgesehen ist, dessen n Eingänge mit den n Ausgängen (5) des sendeseitigen Parallelregisters (4), dessen Takteingang mit dem Ausgang (9) des sendeseitigen (n+x):n-Frequenzteilers (8) und dessen Ladeeingang mit dem Ausgang (11) des sendeseitigen (n+x):1-Frequenzteilers (10) verbunden sind,
daß eine Anordnung (19) zur Rückgewinnung des Empfangstakts (Te) vorgesehen ist, deren Eingang mit dem Eingang (16) für das Empfangs-Multiplexsignal (F1an) verbunden ist,
daß eine Anordnung (17) zur Gewinnung eines Rahmen-Synchronsignals (RSe) vorgesehen ist, deren Eingang mit dem Eingang (16) für das Empfangs-Multiplexsignal (F1an) verbunden ist,
daß ein empfangsseitiger Seriell-Parallel-Umsetzer (23) vorgesehen ist, in dem das Empfangs-Multiplexsignal (F1an) mit dem Empfangstakt (Te) umgesetzt wird,
daß ein empfangsseitiges Parallelregister (25) vorgesehen ist, dessen n Eingänge mit den n Ausgängen (24) des empfangsseitigen Seriell-Parallel-Umsetzers (23) verbunden sind,
daß ein n:1-Frequenzteiler (21) vorgesehen ist, dessen Eingang mit dem Ausgang (20) der Anordnung (19) zur Rückgewinnung des Empfangstakts (Te) und dessen Ausgang (22) mit dem Takteingang des empfangsseitigen Parallelregisters (25) verbunden ist,
daß ein empfangsseitiger (n+x):1-Teiler (29) vorgesehen ist, dessen Eingang mit dem Ausgang (15) des Hilfstaktgenerators (14) verbunden ist,
daß eine Phasenanpassungseinrichtung (31) vorgesehen ist, deren Eingang mit dem Ausgang (18) der Anordnung (17) zur Gewinnung des empfangsseitigen Rahmen-Synchronsignals (RSe) und deren Ausgang (32) mit einem Setzeingang des empfangsseitigen (n+1):1-Teilers (29) verbunden ist,
daß ein empfangsseitiger Parallel-Seriell-Umsetzer (27) vorgesehen ist, dessen n Eingänge mit den n Ausgängen (26) des empfangsseitigen Parallelregisters (25) verbunden sind, dessen Ausgang (28) der Abgabe des synchronisierten Empfangs-Multiplexsignals (F1an') dient, dessen Takteingang mit dem Ausgang (15) des Hilfstaktgenerators (14) und dessen Ladeeingang mit dem Ausgang (30) des empfangsseitigen (n+x):1-Teilers (29) verbunden ist.

## Claims

1. Method for generating a transmission multiplex signal (F1ab) having transmission data structured into n-bit bytes, and for synchronizing a reception multiplex signal (F1an), which is plesiochronous with respect to the transmission multiplex signal (F1ab) and has the same bit rate and, likewise, reception data structured into n-bit bytes, with the synchronous transmission clock signal (Ts) of the transmission multiplex signal (F1ab),
characterized
in that a common auxiliary clock signal (Th) is generated, from which the transmission clock signal (Ts) is derived and whose frequency is selected such that it is 1/n or a multiple thereof greater than the nominal frequency of the reception clock signal (Te) and the frequency of the transmission clock signal (Ts),
in that the transmission data are interleaved in an auxiliary frame in such a way that x dummy bits follow each n-bit byte (x = 1, 2, 3,...),
in that the bits of the auxiliary frame are subjected to serial-parallel conversion with the common auxiliary clock signal (Th),
in that the transmission data are stored with a transmission-end auxiliary clock signal (Tps), which is (n+x):1 divided from the common auxiliary clock signal (Th) and is controlled by a transmission-end frame synchronization signal (RSs),
in that the stored transmission data, loaded with the transmission-end auxiliary clock signal (Tps), are subjected to parallel-serial conversion with the transmission clock signal (Ts) and form the transmission multiplex signal (F1ab),
in that the reception clock signal (Te) is recovered from the reception multiplex signal (F1an),
in that reception-end frame synchronization signals (RSe) are separated from the reception multiplex signal (F1an),
in that the reception data are subjected to serial-parallel conversion with the reception clock signal (Te),
in that the converted reception data are stored with a reception-end auxiliary clock signal (Tpe), which is n:1 divided from the reception clock signal (Te),
in that the reception-end frame synchronization signals (RSe) are matched in terms of phase with the common auxiliary clock signal (Th), and
in that the stored reception data are subjected to parallel-serial conversion with the common auxiliary clock signal (Th), in a manner triggered by each matched frame synchronization signal (RSe'), and form the synchronized reception multiplex signal (F1an').

2. Method according to Claim 1,
characterized
in that the frequency of the common auxiliary clock signal (Th) is selected such that it is twice as large as the frequency of the reception clock signal (Te) and of the transmission clock signal (Ts).

3. Method according to Claim 1,
characterized
in that n=8 and x=8 are selected.

4. Method according to Claim 1,
characterized
in that a pulse frame according to CCITT Recommendation G.704 is selected,
in that synchronization with the pulse frame according to CCITT Recommendation G.706 is selected,
in that one synchronization pulse is generated per pulse frame,
in that 4.096 MHz is selected as the frequency of the auxiliary clock signal (Th),
in that 2.048 MHz is selected as the frequency of the transmission clock signal (Ts) and of the reception clock signal (Te), and in that 2.048 Mbit/s is selected as the data rate of the transmission and reception multiplex signals (F1ab, F1an).

5. Arrangement for carrying out the method according to Claim 1, 2, 3 or 4,
characterized
in that a transmission-end serial-parallel converter (2) is provided, whose input (1) serves to receive the transmission data interleaved in the auxiliary frame and whose clock input is connected to the output (15) of an auxiliary clock generator (14),
in that a transmission-end (n+x):1 frequency divider (10) is provided, whose input is connected to the output (15) of the auxiliary clock generator (14),
in that a transmission-end synchronization device (12) is provided, whose input is connected to the output (15) of the auxiliary clock generator (14) and whose output is connected to the synchronization input (13) of the (n+x):1 frequency divider (10),
in that a transmission-end parallel register (4) is provided, whose inputs (3) are connected to the outputs of the transmission-end serial-parallel converter (2),
in that a transmission-end (n+x):n frequency divider (8) for deriving the transmission clock signal (Ts) from the common auxiliary clock signal (Th) is provided,
in that a transmission-end parallel-serial converter (6) is provided, whose n inputs are connected to the n outputs (5) of the transmission-end parallel register (4), whose clock input is connected to the output (9) of the transmission-end (n+x):n frequency divider (8) and whose load input is connected to the output (11) of the transmission-end (n+x):1 frequency divider (10),
in that an arrangement (19) for recovering the reception clock signal (Te) is provided, whose input is connected to the input (16) for the reception multiplex signal (F1an),
in that an arrangement (17) for obtaining a frame synchronization signal (RSe) is provided, whose input is connected to the input (16) for the reception multiplex signal (F1an),
in that a reception-end serial-parallel converter (23) is provided, in which the reception multiplex signal (F1an) is converted with the reception clock signal (Te),
in that a reception-end parallel register (25) is provided, whose n inputs are connected to the n outputs (24) of the reception-end serial-parallel converter (23),
in that an n:1 frequency divider (21) is provided, whose input is connected to the output (20) of the arrangement (19) for recovering the reception clock signal (Te) and whose output (22) is connected to the clock input of the reception-end parallel register (25),
in that a reception-end (n+x):1 divider (29) is provided, whose input is connected to the output (15) of the auxiliary clock generator (14),
in that a phase matching device (31) is provided, whose input is connected to the output (18) of the arrangement (17) for obtaining the reception-end frame synchronization signal (RSe) and whose output (32) is connected to a set input of the reception-end (n+1):1 divider (29),
in that a reception-end parallel-serial converter (27) is provided, whose n inputs are connected to the n outputs (26) of the reception-end parallel register (25), whose output (28) serves to emit the synchronized reception multiplex signal (F1an'), whose clock input is connected to the output (15) of the auxiliary clock generator (14) and whose load input is connected to the output (30) of the reception-end (n+x):1 divider (29).

## Revendications

1. Procédé pour produire un signal multiplex d'émission (F1ab), ayant des données d'émission décomposées en octets de n bits, et pour synchroniser un signal multiplex de réception (F1an), plésiochrone par rapport au signal multiplex d'émission (F1ab) et de même débit binaire, ayant également des données de réception décomposées en octets de n bits, sur l'horloge d'émission synchrone (Ts) du signal multiplex d'émission (F1ab),
caractérisé par le fait que
on produit une horloge auxiliaire (Th) commune à partir de laquelle on déduit l'horloge d'émission (Ts) et dont on choisit la fréquence plus grande, de 1/n ou d'un multiple de cette valeur, que la fréquence nominale de l'horloge de réception (Te) et que la fréquence de l'horloge d'émission (Ts),
on insère les données d'émission dans une trame auxiliaire de telle sorte que chaque octet de n bits est suivi par x bits de remplissage (x = 1, 2, 3,...),
on effectue avec l'horloge auxiliaire commune (Th) une conversion série-parallèle des bits de la trame auxiliaire,
on mémorise les données d'émission avec une horloge auxiliaire (Tps) côté émission obtenue par division (n+x):1 de l'horloge auxiliaire commune (Th) et commandée par un signal de synchronisation de trame (RSs) côté émission,
on effectue avec l'horloge d'émission (Ts) une conversion parallèle-série des données mémorisées d'émission, chargée par l'horloge auxiliaire (Tps) côté émission, et on forme le signal multiplex d'émission (F1ab),
on récupère l'horloge de réception (Te) à partir du signal multiplex de réception (F1an),
on extrait des signaux de synchronisation de trame (RSe) côté réception du signal multiplex de réception (F1an),
on effectue avec l'horloge de réception (Te) une conversion série-parallèle des données de réception,
on mémorise les données converties de réception avec une horloge auxiliaire (Tpe) côté réception obtenue par division n:1 de l'horloge de réception (Te),
on adapte en phase les signaux de synchronisation de trame (RSe) côté réception avec l'horloge auxiliaire commune (Th), et
on effectue avec l'horloge auxiliaire commune (Th) une conversion parallèle-série des données mémorisées de réception, déclenchée par chaque signal de synchronisation de trame (RSe') adapté, et on forme le signal multiplex de réception (F1an') synchronisé.

2. Procédé selon la revendication 1,
caractérisé par le fait que l'on choisit la fréquence de l'horloge auxiliaire commune (Th) deux fois plus grande que la fréquence de l'horloge de réception (Te) et de l'horloge d'émission (Ts).

3. Procédé selon la revendication 1,
caractérisé par le fait que l'on choisit n = 8 et x = 8.

4. Procédé selon la revendication 1,
caractérisé par le fait que
on choisit une trame d'impulsions selon la recommandation du CCITT G.704,
on choisit une synchronisation sur la trame d'impulsions selon la recommandation du CCITT G.706,
on produit une impulsion de synchronisation par trame d'impulsions,
on choisit 4,096 MHz pour la fréquence de l'horloge auxiliaire (Th),
on choisit 2,048 MHz pour la fréquence de l'horloge d'émission (Ts) et de l'horloge de réception (Te) et
on choisit 2,048 Mbit/s pour le débit binaire du signal multiplex d'émission (F1ab) et du signal multiplex de réception (F1an).

5. Dispositif pour la mise en oeuvre du procédé selon la revendication 1, 2, 3 ou 4,
caractérisé par le fait que
il est prévu un convertisseur série-parallèle (2) côté émission dont l'entrée (1) sert à la réception des données d'émission insérées dans la trame auxiliaire et dont l'entrée d'horloge est reliée à la sortie (15) d'un générateur d'horloge auxiliaire (14),
il est prévu un diviseur de fréquence (n+x):1 (10) côté émission dont l'entrée est reliée à la sortie (15) du générateur d'horloge auxiliaire (14),
il est prévu un dispositif de synchronisation (12) côté émission dont l'entrée est reliée à la sortie (15) du générateur d'horloge auxiliaire (14) et dont la sortie est reliée à l'entrée de synchronisation (13) du diviseur de fréquence (n+x):1 (10),
il est prévu un registre parallèle (4) côté émission dont les entrées (3) sont reliées aux sorties du convertisseur série-parallèle (2) côté émission,
il est prévu un diviseur de fréquence (n+x):n (8) côté émission destiné à déduire de l'horloge auxiliaire commune (Th) l'horloge d'émission (Ts),
il est prévu un convertisseur parallèle-série (6) côté émission dont les n entrées sont reliées aux n sorties (5) du registre parallèle (4) côté émission, dont l'entrée d'horloge est reliée à la sortie (9) du diviseur de fréquence (n+x):n (8) côté émission et dont l'entrée de chargement est reliée à la sortie (11) du diviseur de fréquence (n+x):1 (10) côté émission,
il est prévu un dispositif (19) qui est destiné à récupérer l'horloge de réception (Te), dont l'entrée est reliée à l'entrée (16) pour le signal multiplex de réception (F1an),
il est prévu un dispositif (17) qui est destiné à obtenir un signal de synchronisation de trame (RSe), dont l'entrée est reliée à l'entrée (16) pour le signal multiplex de réception (F1an),
il est prévu un convertisseur série-parallèle (23) côté réception dans lequel le signal multiplex de réception (F1an) est converti avec l'horloge de réception (Te),
il est prévu un registre parallèle (25) côté réception dont les n entrées sont reliées aux n sorties (24) du convertisseur série-parallèle (23) côté réception,
il est prévu un diviseur de fréquence n:1 (21) dont l'entrée est reliée à la sortie (20) du dispositif (19) destiné à récupérer l'horloge de réception (Te) et dont la sortie (22) est reliée à l'entrée d'horloge du registre parallèle (25) côté réception,
il est prévu un diviseur de fréquence (n+x):1 (29) côté réception dont l'entrée est reliée à la sortie (15) du générateur d'horloge auxiliaire (14),
il est prévu un dispositif d'adaptation de phase (31) dont l'entrée est reliée à la sortie du dispositif (17) destiné à obtenir le signal de synchronisation de trame (RSe) côté réception et dont la sortie (32) est reliée à une entrée de commutation du diviseur de fréquence (n+x):1 (29) côté réception,
il est prévu un convertisseur parallèle-série (27) côté réception dont les n entrées sont reliées aux n sorties (26) du registre parallèle (25) côté réception, dont la sortie (28) sert à délivrer le signal multiplex de réception synchronisé (F1an'), dont l'entrée d'horloge est reliée à la sortie (15) du générateur d'horloge auxiliaire (14) et dont l'entrée de chargement est reliée à la sortie (30) du diviseur de fréquence (n+x):1 (29) côté réception.
